# FASCICULE DE BREVET EUROPEEN

(11) **EP 1 967 481 B1**
(45) Date de publication et mention de la délivrance du brevet: **13.11.2013**
(21) Numéro de dépôt: 08290168.7
(22) Date de dépôt: 22.02.2008
(51) Int. Cl.: B66C 1/02, B65H 3/08

(54) **Tête de préhension d'articles par aspiration à déperdition d'aspiration controlée par un matériau déformable élastiquement**
Kopf zum Greifen von Gegenständen durch Aspiration mit kontrolliertem Ansaugverlust mit Hilfe eines elastisch verformbaren Materials
Head for picking up items by suction with suction loss controlled by an elastically deformable material

(30) Priorité: 08.03.2007 FR 0701680
(43) Date de publication de la demande: 10.09.2008
(73) Titulaire: Joulin, François, 91150 Morigny (FR); Joulin, Laurent, 92130 Issy Les Moulineaux (FR)
(72) Inventeur: Joulin, François, 91150 Morigny (FR); Joulin, Laurent, 92130 Issy Les Moulineaux (FR)
(74) Mandataire: Fruchard, Guy

(56) Documents cités:
- DE-A1- 2 629 160
- FR-A1- 2 284 470
- FR-A1- 2 495 592
- FR-A1- 2 803 586

## Description

La présente invention concerne une tête de préhension par aspiration.

### ARRIERE PLAN DE L'INVENTION

On connaît, notamment du document FR-A-2 803 586, une tête de préhension d'articles par aspiration comprenant un caisson ayant une semelle percée d'orifices d'aspiration et équipée à l'extérieur du caisson d'une plaque de matériau déformable comportant des perçages traversant la plaque en regard des orifices d'aspiration. Pour éviter une trop grande déperdition de l'aspiration à travers les orifices d'aspiration qui ne sont pas en regard d'un article à soulever, il est prévu dans ce document de réaliser dans le caisson des compartiments reliés à des collecteurs d'aspiration par des orifices pouvant être obturés par des clapets. Un tel dispositif est complexe et donc onéreux à réaliser et les clapets sont adaptés à une dimension particulière des orifices d'aspiration de sorte que la tête de préhension ainsi réalisée est destinée à un usage précis.

Par ailleurs, la plaque de matière déformable décrite dans ce document ne participe en aucune façon à minimiser la déperdition de l'aspiration. Bien au contraire, dans un mode de réalisation préféré, les perçages dans la plaque de matériau déformable sont mis en forme par des inserts rigides.

Le document FR-A-2 495 592 décrit une tête de préhension par aspiration selon le préambule de la revendication 1.

### OBJET DE L'INVENTION

Le but de l'invention est de proposer une tête de préhension de structure simplifiée et facilement adaptable à la saisie de différents articles.

### RESUME DE L'INVENTION

En vue de la réalisation de ce but, on propose selon l'invention une tête de préhension d'articles par aspiration comprenant un caisson ayant une semelle percée d'orifices d'aspiration et équipée d'une plaque de matériau déformable élastiquement comportant des perçages traversant la plaque en regard d'au moins une partie des orifices d'aspiration, les perçages ayant des formes et des dimensions qui sont fonction de la plaque de matériau déformable et des dimensions des orifices d'aspiration pour que les perçages aient une section réduite lorsque le caisson est en dépression en l'absence d'articles en regard des perçages. Ainsi, par une simple définition de la forme et des dimensions des perçages, il est possible de réduire la déperdition de l'aspiration en l'absence d'un article en regard d'un perçage. Au contraire, dès qu'un article est disposé en regard d'un perçage, les pressions s'équilibrent de part et d'autre de la plaque de matériau déformable élastiquement de sorte que les perçages peuvent retrouver leur forme initiale et le vide nécessaire à la préhension des articles est rapidement obtenu.

En outre, pour un changement d'articles à soulever, il suffit de changer la plaque de matériau déformable ou de prévoir une semelle amovible permettant un échange avec une semelle adaptée aux articles à soulever.

Selon un aspect avantageux de l'invention, les perçages de la plaque de matériau déformable élastiquement sont associés à des cavités ayant des dimensions supérieures aux perçages. Ainsi, tout en permettant la variation de la section des perçages en fonction de la présence ou de l'absence d'un article, on s'assure d'une surface de préhension importante lorsqu'un article est appliqué en regard d'une cavité.

### BREVE DESCRIPTION DES DESSINS

D'autres caractéristiques et avantages de l'invention apparaîtront à la lecture de la description qui suit de divers modes de réalisation de l'invention en référence aux figures ci-jointes parmi lesquelles :
- la figure 1 est une vue de dessous partielle d'une tête de préhension selon l'invention, en l'absence de dépression dans le caisson,
- la figure 2 est une vue en coupe selon la ligne II-II de la figure 1,
- la figure 3 est une vue en coupe partielle analogue à celle de la figure 2 d'un seul perçage selon un second mode de réalisation de perçage en l'absence de dépression dans le caisson,
- la figure 4 est une vue en coupe analogue à celle de la figure 3, du même mode de réalisation lors de la mise en dépression du caisson,
- la figure 5 est une vue en coupe analogue à celle de la figure 3, d'un troisième mode de réalisation de l'invention,
- la figure 6 est une vue en coupe analogue à celle de la figure 4 du troisième mode de réalisation de l'invention,
- la figure 7 est une vue en coupe analogue à celle de la figure 5, lors de la mise en appui de la tête de préhension sur un article creux à soulever,
- la figure 8 est une vue en coupe analogue à celle de la figure 2 d'un quatrième mode de réalisation de l'invention,
- la figure 9 est une vue de dessous d'une variante de réalisation des perçages du premier mode de réalisation.

### DESCRIPTION DETAILLEE DE L'INVENTION

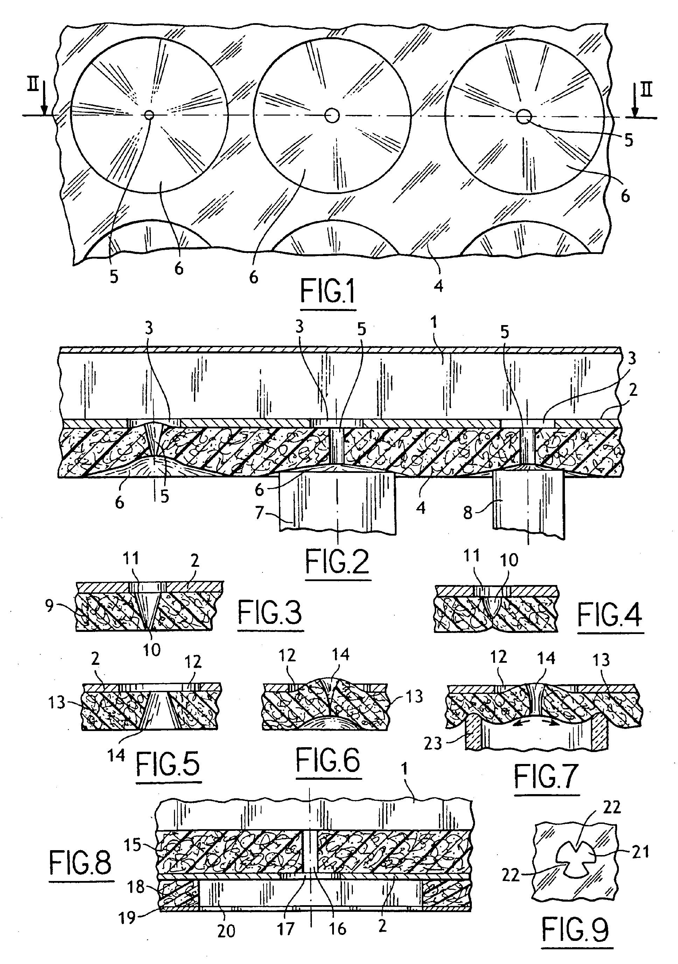

En référence aux figures 1 et 2, la tête de préhension selon l'invention comporte de façon connue en soi un caisson 1 ayant une semelle 2 percée d'orifices d'aspiration 3 associés à des collecteurs d'aspiration non représentés.

Dans le premier mode de réalisation de l'invention illustré par les figures 1 et 2, une plaque de matériau déformable élastiquement 4 est fixée sous la semelle 2 du caisson 1 et comporte des perçages 5 en regard de chaque orifice d'aspiration 3. Au repos, c'est-à-dire en l'absence de dépression dans le caisson 1, les perçages 5 de ce mode de réalisation sont cylindriques et débouchent dans des cavités tronconiques 6 allant en s'évasant depuis l'extrémité inférieure des perçages 5 jusqu'à la surface inférieure de la plaque de matériau élastiquement déformable 4.

Contrairement aux dispositifs antérieurs, tels que décrits dans le document précité, les perçages 5 ne sont pas renforcés par des inserts rigides pour les maintenir en forme, mais au contraire, la forme et les dimensions des perçages 5 sont déterminées pour que les perçages 5 aient une section réduite lorsque le caisson est en dépression en l'absence d'articles en regard des perçages. Dans le mode de réalisation illustré, la plaque déformable 4 est par exemple réalisée en EPDM ou en polyuréthanne à cellules semi-ouvertes, la plaque ayant une épaisseur de 20 mm à 30 mm pour des perçages 5 ayant un diamètre de 6 mm et des orifices d'aspiration 3 ayant un diamètre de 14 mm.

Comme illustré sur la partie gauche de la figure 2, lorsque le caisson 1 est mis en dépression, par exemple en maintenant le caisson à une pression absolue de 0,3.10⁵ Pa, la perte de charge de l'air aspiré à travers le perçage 5 provoque une déformation de la plaque élastique de sorte que la face interne de la plaque élastique s'incurve dans l'ouverture d'aspiration 3 et le perçage 5 subit un pincement à son extrémité inférieure, ce qui provoque une perte de charge accrue à travers le perçage 5 et une déformation accrue de la plaque élastique jusqu'à ce que la force élastique exercée localement par la plaque déformable 4 équilibre la force s'exerçant sur la surface de l'orifice d'aspiration 3 soumise à la dépression du caisson 1. Dans cette position, le perçage 5 correspondant a une section réduite ou peut même être totalement fermé selon la mousse utilisée et la dimension des perçages.

Lorsque la tête de préhension est amenée en contact d'un article tel qu'une boîte de conserve 7 illustrée en regard du perçage 5 médian sur la figure 1, ou une boîte de conserve de dimensions plus réduites 8 illustrée en regard du perçage 5 de droite de la figure 2, le bord supérieur de l'article à soulever assure une fermeture totale de l'aspiration à travers le perçage 5 correspondant, de sorte que la pression dans le compartiment 6 s'équilibre rapidement avec la pression dans le caisson 1. Le perçage 5 n'étant plus soumis à un flux d'air, la plaque de matière déformable 4 retrouve localement sa forme initiale et le compartiment 6 reste donc soumis à la dépression du caisson 1. On remarquera à ce propos que pour des articles ayant une face supérieure plane, si les perçages 5 débouchaient dans une surface inférieure plane de la plaque déformable 4, la force de préhension serait donnée par la section du perçage 5 quelle que soit la dimension de l'article. En associant aux perçages des cavités ayant une paroi conique, il est donc possible de développer une force de préhension correspondant à l'ensemble de la surface supérieure de l'article pour des articles ayant un diamètre inférieur au plus grand diamètre des cavités.

Par ailleurs, l'utilisation de perçages 5 ayant un diamètre inférieur aux orifices d'aspiration 3, permet de profiter de la section totale de passage des perçages 5 même dans le cas où ceux-ci ne sont parfaitement centrés sur les orifices d'aspiration 3.

Les figures 3 et 4 illustrent un deuxième mode de réalisation dans lequel des perçages 11 dans la semelle 2 du caisson 1 ont un diamètre plus réduit que dans le premier mode de réalisation, par exemple un diamètre de 8 mm et la plaque en matériau déformable 9 qui lui est associée est une mousse alvéolaire plus dure que dans le premier mode de réalisation, par exemple une mousse à cellules fermées dans laquelle sont réalisés des perçages 10 qui, au repos, ont une section décroissante depuis la semelle du caisson vers la face opposée de la plaque 9. Lors de la mise en dépression du caisson 1, seul le pourtour de l'extrémité inférieure du perçage 10 se déforme pour se mettre en arc-boutant comme illustré par la figure 4, de sorte que la force élastique de réouverture des perçages 10 est très grande. Ce mode de réalisation peut également comporter des cavités associées aux perçages 10.

Dans le, troisième mode de réalisation illustré par les figures 5 à 7, les orifices d'aspiration 12 dans la semelle 2 du caisson 1 ont un diamètre supérieur au premier mode de réalisation. La plaque de matériau déformable 13 qui lui est associée est réalisée en mousse alvéolaire molle traversée par des perçages 14 ayant au repos une section croissante depuis la semelle 2 vers la face opposée de la plaque 13. Le diamètre des orifices d'aspiration 12 est très supérieur à celui des perçages 14. Lors d'une mise en dépression du caisson 1, la plaque 13 se déforme fortement comme illustré par la figure 6 et les perçages 14 se referment du côté de la face inférieure de la plaque 13. Lors de l'application de la tête de préhension sur un article creux 23, la matière constituant la plaque 13 est tirée latéralement comme illustré par des flèches en trait épais sur la figure 7, ce qui facilite la réouverture des perçages 14 même si ceux-ci étaient fermés par pincement.

Dans le quatrième mode de réalisation illustré par la figure 8, la plaque en matériau déformable 15 est disposée à l'intérieur du caisson 1 et est traversée par des perçages 16 qui débouchent dans les orifices d'aspiration 17. Dans ce cas il est possible d'associer à la face inférieure de la semelle 2 une seconde plaque de matériau déformable 18 ayant une dureté adaptée aux articles à soulever sans se préoccuper de la déperdition de dépression, celle-ci étant minimisée par les perçages 16. Dans ce cas il est même possible d'associer une peau 19 à la face inférieure de la plaque 18 et de réaliser des compartiments 20 de grand diamètre, ce qui permet tout à la fois de minimiser l'usure de la plaque 18 et de soulever des articles présentant une surface supérieure lisse de grand diamètre.

La figure 9 illustre une variante de réalisation d'un perçage cylindrique dans laquelle le perçage 21 comporte un contour présentant des parties en saillie 22 s'étendant en regard de parties de contour ayant une forme non complémentaire de la partie en saillie. Ce type de relief est utilisé lorsque l'on souhaite maintenir un débit de fuite relativement important assurant une ouverture très rapide du perçage correspondant lors de la mise en appui sur un article à soulever.

Bien entendu, l'invention n'est pas limitée aux modes de réalisation décrits et on peut y apporter des variantes de réalisation sans sortir du cadre de l'invention tel que défini par les revendications.

En particulier, bien que quelques exemples seulement aient été décrits, la structure de la plaque sera adaptée à chaque application en faisant varier la forme et les dimensions des orifices d'aspiration, la nature, l'épaisseur et la conformation des surfaces de la plaque de matériau déformable élastiquement, la forme et les dimensions des perçages, les conditions de fonctionnement de la source d'aspiration. La combinaison de ces paramètres est effectuée en tenant compte des différentes interactions pour obtenir une réduction de la section des perçages, voire une fermeture quasi-totale de ceux-ci dans une zone où des articles ne sont pas en regard des perçages alors que le caisson est mis en dépression.

Bien que l'invention ait été décrite en relation avec un caisson 1 comportant une semelle fixe 2, on peut prévoir de réaliser le caisson 1 avec une semelle 2 amovible permettant de changer très rapidement une semelle d'un mode de réalisation par une semelle d'un autre mode de réalisation compte tenu des articles dont la préhension doit être assurée.

On peut également prévoir une semelle 2 dans laquelle sont réalisés des orifices d'aspiration de différentes tailles disposés selon différentes répartitions, l'adaptation du caisson à une application donnée étant effectuée par la structure de la plaque en matériau déformable qui est associée à la semelle 2, les perçages correspondant s'étendant en regard d'une partie seulement des ouvertures d'aspiration.

Le caisson 1 selon l'invention peut être associé à une réserve comme cela est connu en soi du document FR-A-2 640 600, ou comporter un cloisonnement assurant une mise en série des orifices d'aspiration comme cela est connu en soi du document FR-A-2 793 227.

Dans le premier mode de réalisation, les cavités 6 peuvent avoir toute forme appropriée à la forme des articles à soulever. La plaque 4 peut en outre être réalisée en deux parties accolées, l'une comprenant les perçages 3 et l'autre les cavités 6. Dans ce cas on peut utiliser deux matières différentes pour les parties. La section des perçages n'est pas limitée à la section circulaire comme illustré mais peut avoir toute forme triangulaire, polygonale, curviligne, régulière ou irrégulière, en fonction des performances recherchées.

## Revendications

1. Tête de préhension d'articles par aspiration comprenant un caisson (1) ayant une semelle (2) percée d'orifices d'aspiration (3 ; 11 ; 12) et équipée d'une plaque de matériau déformable élastiquement (4 ; 9 ; 13 ; 15) comportant des perçages (5 ; 10 ; 14 ; 16) qui traversent la plaque en regard d'au moins une partie des orifices d'aspiration, **caractérisée en ce que** les perçages (5 ; 10 ; 14 ; 16) sont déformables lors d'une dépression dans le caisson pour se pincer au niveau de l'extrémité inférieure du perçage, de sorte que lesdits perçages présentent une section de passage réduite par rapport à une situation de repos, les orifices d'aspiration (3 ; 11 ; 12) ayant des dimensions supérieures à celles des perçages en regard.

2. Tête de préhension selon la revendication 1, **caractérisée en ce que** les perçages sont associés à des cavités (6; 20) ayant des dimensions supérieures aux perçages (5; 16).

3. Tête de préhension selon la revendication 2, **caractérisée en ce que** les cavités (6) vont en s'évasant depuis les perçages (5).

4. Tête de préhension selon la revendication 1, **caractérisée en ce qu'**au repos les perçages (10) ont une section décroissante depuis la semelle (2) du caisson vers une face opposée de la plaque (9).

5. Tête de préhension selon la revendication 1, **caractérisée en ce qu'**au repos les perçages (14) ont une section croissante depuis la semelle (2) du caisson vers une face opposée de la plaque, et les orifices d'aspiration (12) ont des dimensions très supérieures aux perçages (14).

6. Tête de préhension selon la revendication 1, **caractérisée en ce que** les perçages (9) ont des contours présentant des parties (22) en regard de parties de forme non complémentaire.

7. Tête de préhension selon la revendication 1, **caractérisée en ce que** la plaque (15) de matériau déformable élastiquement est disposée à l'intérieur du caisson.

8. Tête de préhension selon la revendication 7, **caractérisée en ce qu'**elle comporte en outre une plaque en matériau déformable (18) à l'extérieur du caisson, cette plaque comportant des cavités (20) entourant les orifices d'aspiration (17) de la semelle (2) du caisson.

9. Tête de préhension selon la revendication 6, **caractérisée en ce que** les cavités (20) ont des dimensions supérieures aux dimensions des perçages (16) dans la plaque de matériau déformable élastiquement intérieure au caisson.

10. Tête de préhension selon la revendication 8, **caractérisée en ce que** la plaque déformable (18) disposée à l'extérieur du caisson (1) comporte une peau (19).

## Patentansprüche

1. Kopf zum Greifen von Gegenständen durch Ansaugen, umfassend ein Gehäuse (1) mit einer Grundplatte (2), die mit Ansaugöffnungen (3 ; 11 ; 12) durchsetzt und mit einer Platte aus elastisch verformbarem Material (4 ; 9 ; 13 ; 15) versehen ist, die Durchbrechungen (5 ; 10 ; 14 ; 16) aufweist, die gegenüber von mindestens einem Abschnitt der Ansaugöffnungen durch die Platte verlaufen, **dadurch gekennzeichnet, dass** die Durchbrechungen (5 ; 10 ; 14 ; 16) bei einem Unterdruck im Gehäuse verformbar sind, um sich auf Höhe des unteren Endes der Durchbrechung zusammenzuquetschen, so dass die besagten Durchbrechungen relativ zu einem Ruhezustand einen verringerten Durchgangsquerschnitt aufweisen, wobei die Ansaugöffnungen (3 ; 11 ; 12) Abmessungen haben, die größer als die gegenüberliegenden Durchbrechungen sind.

2. Kopf zum Greifen nach Anspruch 1, **dadurch gekennzeichnet, dass** die Durchbrechungen mit Hohlräumen (6; 20) verbunden sind, die größere Abmessungen als die Durchbrechungen (5; 16) aufweisen.

3. Kopf zum Greifen nach Anspruch 2, **dadurch gekennzeichnet, dass** sich die Hohlräume (6) von den Durchbrechungen (5) aus erweitern.

4. Kopf zum Greifen nach Anspruch 1, **dadurch gekennzeichnet, dass** die Durchbrechungen (10) im Ruhezustand einen Querschnitt aufweisen, der von der Grundplatte (2) des Gehäuses in Richtung einer der Platte (9) gegenüberliegenden Seite geringer wird.

5. Kopf zum Greifen nach Anspruch 1, **dadurch gekennzeichnet, dass** die Durchbrechungen (14) im Ruhezustand einen Querschnitt aufweisen, der von der Grundplatte (2) des Gehäuses aus in Richtung einer der Platte gegenüberliegenden Seite größer wird, und dass die Ansaugöffnungen (12) Abmessungen aufweisen, die deutlich größer als die der Durchbrechungen (14) sind.

6. Kopf zum Greifen nach Anspruch 1, **dadurch gekennzeichnet, dass** die Durchbrechungen (9) Konturen mit Abschnitten (22) aufweisen, die Abschnitten nicht komplementärer Form gegenüberliegen.

7. Kopf zum Greifen nach Anspruch 1, **dadurch gekennzeichnet, dass** die Platte (15) aus elastisch verformbaren Material im Inneren des Gehäuses angeordnet ist.

8. Kopf zum Greifen nach Anspruch 7, **dadurch gekennzeichnet, dass** er des Weiteren außerhalb des Gehäuses eine Platte aus verformbarem Material (18) umfasst, wobei diese Platte die Ansaugöffnungen (17) der Grundplatte des Gehäuses umgebende Hohlräume (20) umfasst.

9. Kopf zum Greifen nach Anspruch 6, **dadurch gekennzeichnet, dass** die Hohlräume (20) Abmessungen haben, die größer als die der Durchbrechungen (16) in der Platte aus elastisch verformbarem Material im Inneren des Gehäuses sind.

10. Kopf zum Greifen nach Anspruch 8, **dadurch gekennzeichnet, dass** die außerhalb des Gehäuses (1) angeordnete verformbare Platte (18) eine Haut (19) aufweist.

## Claims

1. Suction article holding head including a box (1) having a base plate (2) pierced with suction holes (3; 11; 12) and equipped with an elastically deformable material plate (4; 9; 13; 15) including bores (5; 10; 14; 16) through the plate facing at least a portion of the suction holes, **characterised in that** the bores (5; 10; 14; 16) are deformable when the pressure inside the box is reduced so as to be gripped at the level of the lower end of the bore so that said bores have a passage section reduced relative to a rest situation, the suction holes (3; 11; 12) having dimensions greater than those of the facing bores.

2. Holding head according to claim 1, **characterised in that** the bores are associated with cavities (6; 20) having greater dimensions than the bores (5; 16).

3. Holding head according to claim 2, **characterised in that** the cavities (6) widen out from the bores (5).

4. Holding head according to claim 1, **characterised in that** at rest the bores (10) have a section decreasing from the base plate (2) of the box towards an opposite side of the plate (9).

5. Holding head according to claim 1, **characterised in that** at rest the bores (14) have a section increasing from the base plate (2) of the box towards an opposite side of the plate and the suction holes (12) have much greater dimensions the bores (14).

6. Holding head according to claim 1, **characterised in that** the bores (9) have contours including portions (22) facing portions of non-complementary shape.

7. Holding head according to claim 1, **characterised in that** the elastically deformable material plate (15) is disposed inside the box.

8. Holding head according to claim 7, **characterised in that** it further includes a deformable material plate (18) outside the box, this plate including cavities (20) surrounding the suction holes (17) in the base plate (2) of the box.

9. Holding head according to claim 6, **characterised in that** the cavities (20) have dimensions greater than the dimensions of the bores (16) in the elastically deformable material plate inside the box.

10. Holding head according to claim 8, **characterised in that** the deformable plate (18) disposed outside the box (1) includes a skin (19).
